# EUROPEAN PATENT APPLICATION

(11) **EP 4 404 363 A1**
(43) Date of publication of application: **24.07.2024**
(21) Application number: 23864101.3
(22) Date of filing: 28.08.2023
(51) Int. Cl.: H01M 50/342, H01M 50/242, H01M 50/105, H01M 50/211, H01M 50/249

(54) **BATTERY CELL, AND BATTERY PACK AND VEHICLE INCLUDING SAME**

(30) Priority: 09.12.2022 KR 20220171820; 31.03.2023 KR 20230043132
(71) Applicant: LG ENERGY SOLUTION, LTD., Seoul 07335 (KR)
(72) Inventor: CHOI, Wan-Sup, Daejeon 34122 (KR); KIM, Soo-Youl, Daejeon 34122 (KR); JUNG, Ki-Taek, Daejeon 34122 (KR); HAN, Seung-Won, Daejeon 34122 (KR); HAN, Min-Hee, Daejeon 34122 (KR)
(74) Representative: Plasseraud IP
(86) International application number: PCT/KR2023/012735
(87) International publication number: WO 2024/122802

(57) **Abstract**

A battery cell according to an embodiment of the present disclosure includes: a case configured to accommodate an electrode assembly in an accommodation space provided between a first case part and a second case part facing each other; and an electrode lead having one end connected to the electrode assembly and the other end extending to the outside of the case, and the case includes: a sealing portion provided by bonding an edge of the first case part and an edge of the second case part to each other so as to seal the accommodation space; and a venting portion provided in a portion of the case, excluding an edge portion where the sealing portion is provided.

## Description

### TECHNICAL FIELD

The present application claims priority to Korean Patent Application No. 10-2022-0171820 filed on December 09, 2022 and Korean Patent Application No. 10-2023-0043132 filed on March 31, 2023 in the Republic of Korea, the disclosures of which are incorporated herein by reference.

The present disclosure relates to a battery cell, and a battery pack and a vehicle including the same, and more specifically, it relates to a battery cell capable of being charged and discharged, and a battery pack and a vehicle including such a battery cell.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting these battery modules in series, parallel, or a combination thereof, has been widely used.

As described above, since the battery cells included in a battery module or battery pack are densely disposed in a narrow space to increase energy density, it is necessary to precisely control the direction of discharging high-temperature gas or flame generated from the respective battery cells.

However, as disclosed in Japanese Unexamined Patent Publication No. 2003-132868, the existing technology intentionally reduces the bonding force of a specific sealing portion of a pouch-type battery cell in order to vent gas generated inside the pouch-type battery cell to the outside. As a result, the existing technology have problems of deteriorating the sealing performance of the battery cell and being unable to precisely control the gas discharge direction when applied in practice. This is due to the fact that the sealing portion of the pouch-type battery cell is manufactured by heat-fusing a PP (polypropylene) layer between the metal sheets that constitute the case of the battery cell, which makes it difficult to perform uniform manufacturing due to various factors such as heating temperature and time, thickness or quality of the PP layer, and the like.

In addition, as disclosed in Korean Unexamined Patent Publication No. 10-2022-0052183, etc., in the existing technologies, since a battery pack is manufactured by storing battery cells in a box-shaped metal case to configure battery modules and then storing these battery modules in a battery pack case, there are problems of increasing the overall weight and volume of the battery pack and lowering the energy density of the battery pack.

### DISCLOSURE

### Technical Problem

The present disclosure has been designed to solve the problems of the related art, and therefore the present disclosure is directed to providing a battery cell capable of precisely controlling the gas discharge direction when swelling or thermal runaway occurs in the battery cell, and a battery pack and a vehicle including the battery cell.

The present disclosure also provides a battery cell that reduces the overall weight and volume of a battery pack including a plurality of battery cells and improves energy density thereof, and a battery pack and a vehicle including the battery cell.

### Technical Solution

In one aspect of the present disclosure, there is provided a battery cell including: a case including a first case part and a second case part facing each other and configured to accommodate an electrode assembly in an accommodation space provided between the first case part and the second case part; and an electrode lead having one end connected to the electrode assembly and the other end extending to the outside of the case, wherein the case includes: a sealing portion provided by bonding an edge of the first case part and an edge of the second case part to each other so as to seal the accommodation space; and a venting portion provided in a portion of the case, excluding an edge portion where the sealing portion is provided, and configured to discharge the gas from the accommodation space to the outside of the case.

In an embodiment, the venting portion may constitute a part of the case and may be configured to rupture earlier than the sealing portion when gas pressure in the accommodation space increases.

In an embodiment, the venting portion may be configured to be thinner than other portions of the case or may be configured to have the same thickness as those of the other portions and have a line-shaped groove or notch provided therein.

In an embodiment, the edge of the case may include: a first edge portion including the sealing portion; and a second edge portion formed integrally with the first case part and the second case part, and the venting portion may be provided in the second edge portion.

In another aspect of the present disclosure, there is provided a battery pack including the battery cell according to any one of the embodiments described above.

In an embodiment, the battery cell may include a pouch-type battery cell.

In an embodiment, the battery pack may further include: a plurality of battery cells each corresponding to the battery cell; a pack case having an inner space that accommodates the plurality of battery cells; and a battery cell cover configured to cover the outer surface of at least one battery cell among the plurality of battery cells accommodated in the inner space.

In an embodiment, the battery cell cover may include: a slot configured to insert the at least one battery cell thereinto; and a vent hole provided at a position corresponding to the venting portion of the at least one battery cell inserted into the slot.

In an embodiment, the battery cell cover may further include: a first cover portion covering a first face of the at least one battery cell; a second cover portion covering a second face of the at least one battery cell; and a third cover portion connecting the first cover portion and the second cover portion and covering a third face of the at least one battery cell located between the first face and the second face, and the vent hole may be provided in the third cover portion.

In an embodiment, the slot may be provided between the first cover portion and the second cover portion.

In an embodiment, the battery cell cover may further include a blocking portion that supports the at least one battery cell inserted into the slot and blocks removal of the at least one battery cell.

In another aspect of the present disclosure, there is provided a vehicle including the battery cell or battery pack according to any one of the embodiments described above.

### Advantageous Effects

According to the present disclosure, since a venting portion for venting the internal gas of the battery cell is provided in the area, excluding sealed edges, of the entire case of the battery cell having the sealed edges, it is possible to precisely control the gas discharge direction when swelling or thermal runaway of the battery cell occurs.

In addition, multiple battery cells are only partially covered by a battery cell cover in a simplified structure and mounted directly to the battery pack case, instead of being accommodated in a separate module case and mounted to the battery pack case, thereby reducing the overall weight and volume of the battery pack and improving the energy density of the battery pack.

In addition, since the battery cell cover has a vent hole provide at a position corresponding to a venting portion of the battery cell, it is possible to prevent serial thermal runaway of other battery cells adjacent to the battery cell, which discharges gas, or other battery units.

In addition, a blocking portion of the battery cell cover supports the battery cell inserted inside the battery cell cover and blocks removal of the battery cell, thereby preventing the battery cell from changing in its position or being separated, and ensuring the safety and reliability of the battery pack.

In addition, an insertion groove into which a jig for changing the spacing between both ends of the battery cell cover is inserted is provided in the blocking portion of the cell cover, thereby facilitating the assembly process of inserting the battery cell into the battery cell cover and preventing damage to the battery cell.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery cell according to an embodiment of the present disclosure.
FIG. 2 is an enlarged view illustrating area A1 in FIG. 1.
FIG. 3 is a diagram illustrating a venting portion of a battery cell according to a modified embodiment.
FIG. 4 is a diagram illustrating a venting portion of a battery cell according to another modified embodiment.
FIG. 5 is a diagram illustrating a battery pack according to an embodiment of the present disclosure.
FIG. 6 is a perspective view illustrating a battery unit included in a battery pack according to an embodiment of the present disclosure.
FIG. 7 is an exploded perspective view illustrating the battery unit shown in FIG. 6.
FIGS. 8 and 9 are diagrams illustrating a method of assembling a battery unit.
FIG. 10 is a diagram illustrating a battery cell cover according to a modified embodiment.
FIG. 11 is a diagram illustrating a battery cell cover according to another modified embodiment.
FIG. 12 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

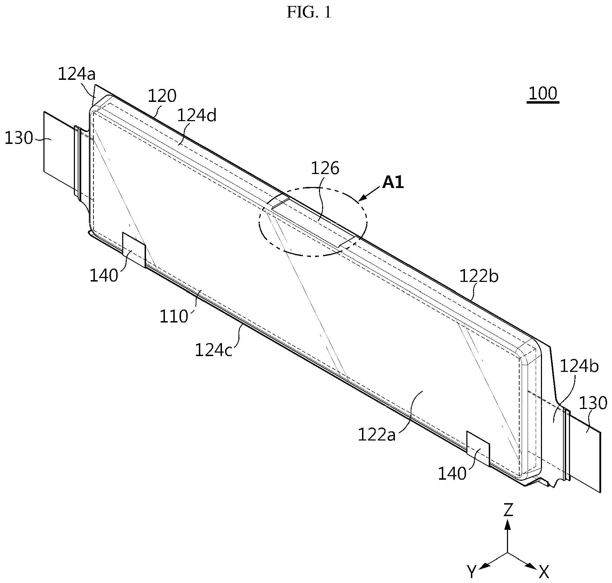

FIG. 1 is a perspective view illustrating a battery cell 100 according to an embodiment of the present disclosure.

As shown in FIG. 1, the battery cell 100 according to an embodiment of the present disclosure includes an electrode assembly 110, a case 120, and an electrode lead 130.

The electrode assembly 110 has a stacked structure in which a positive electrode and a negative electrode are stacked with a separator therebetween.

The case 120 is configured to have a first case part 122a and a second case part 122b facing each other and accommodate the electrode lead 130 and an electrolyte material in an accommodation space provided between the first case part 122a and the second case part 122b. The case 120 may be configured in a pouch shape as shown in FIG. 1.

The case 120 may be manufactured using a metal sheet including aluminum. In an embodiment, the case 120 may be manufactured using a single metal sheet. For example, the case 120 may be manufactured by folding a corresponding metal sheet such that both ends of the metal sheet face each other and then bonding overlapping edge portions of the both ends to each other so as to be sealed. In this case, the first case part 122a and the second case part 122b may be formed integrally with each other.

In another embodiment, the case 120 may be manufactured using two metal sheets. For example, the case may be manufactured by overlapping two metal sheets such that they face each other and then bonding overlapping edge portions of the two metal sheets to each other so as to be sealed. In this case, the first case part 122a and the second case part 122b may be made of different metal sheets from each other.

The edge portions of the case 120 to be bonded to each other may respectively have PP (polypropylene) layers provided on the faces in contact with each other, and these PP layers may be fused by heat to be sealed.

This case sealing process is difficult to perform uniformly due to various factors such as heating temperature or time, the thickness, width, and quality of the PP layer, and the like. Therefore, it is difficult to consistently control the direction of gas discharged through the sealed edge portions of the pouch-type battery cell 100.

Additionally, if high-temperature gas or flame generated inside the battery cell is discharged toward the sealed portion where the electrode lead is located when thermal runaway occurs in the battery cell, a terminal connected to the electrode lead may be damaged or serial thermal runaway may be caused in other surrounding battery cells.

In addition, if the sealing of a specific edge portion is weakened in order to consistently control the direction of gas discharged through the sealed edge portion of the pouch-type battery cell 100, electrolyte may leak or the battery cell may be damaged.

To solve these problems, the case 120 of the pouch-type battery cell 100 according to the present disclosure includes sealing portions 124a, 124b, and 124c and a venting portion 126.

The sealing portions 124a, 124b, and 124c are provided by bonding the edge of the first case part 122a and the edge of the second case part 122b to each other so as to seal the accommodation space of the case 120 in which the electrode assembly 110 is accommodated.

The venting portion 126 is provided in portions of the case 120, excluding the edge portions where the sealing portions 124a, 124b, and 124c are provided, and is configured to discharge the gas from the accommodation space to the outside of the case 120.

In this case, the venting portion 126 constitutes a part of the case 120, and may be configured to rupture earlier than the sealing portions 124a, 124b, and 124c when the gas pressure in the accommodation space increases.

To this end, the venting portion 126 may be configured to be thinner than other portions of the case, or may be configured to have the same thickness as those of the other portions and have a line-shaped groove or notch provided therein.

As described above, the case 120 may be manufactured using a single metal sheet. That is, the case 120 may be manufactured by folding a corresponding metal sheet such that both ends of the metal sheet face each other and then bonding overlapping edge portions of the metal sheet to each other to be sealed.

As a result, the case 120 may include a first edge portion including the sealing portions 124a, 124b, and 124c, and a second edge portion 124d that is formed integrally with the first case part 122a and the second case part 122b and is thus not required to be sealed.

In this case, the venting portion 126 may be provided in the second edge portion 124d. In this way, if the gas discharge position and direction of the battery cell 100 is controlled through the venting portion 126, gas may be discharged in an intended direction from the battery module or battery pack to which the battery cell 100 is applied.

The electrode lead 130 may have one end connected to the positive or negative electrode of the electrode assembly 110 and the other end that extends and is located outside the case 120. In this case, the electrode lead 130 may extend to the outside by passing through edge portions where the sealing portions 124a and 124b are located, among the entire edge of the case 120.

Meanwhile, the sealing portion 124c of the edge portion through which the electrode lead 130 does not pass may be folded so as to be in close contact with the body of the battery cell 100, thereby reducing the size of the battery cell 100, and then fixed by a fixing member 140 such as a tape.

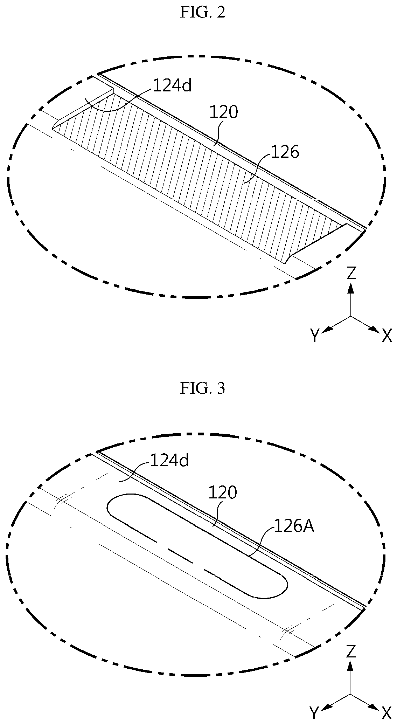

FIG. 2 is an enlarged view illustrating area A1 in FIG. 1.

As shown in FIG. 2, the venting portion 126 of the battery cell 100 may be provided in the second edge portion 124d that is formed integrally with the first case part 122a and the second case part 122b and is thus not required to be sealed, among the entire edge of the case 120.

In this case, the venting portion 126 may constitute a part of the second edge portion 124d and rupture earlier than the sealing portions 124a, 124b, and 124c of the first case part 122a when the gas pressure in the accommodation space inside the case 120 increases.

To this end, the venting portion 126 may be configured to be thinner than other portions of the case 120.

FIG. 3 is a diagram illustrating a venting portion 126A of a battery cell according to a modified embodiment.

As shown in FIG. 3, a venting portion 126A of a battery cell according to a modified embodiment may be configured to have the same thickness as those of other portions of the case 120 and have a line-shaped groove or notch.

The rupture shape of the venting portion 126A may be determined according to the shape of the groove or notch of the venting portion 126A. For example, the venting portion 126A may have a circular, oval, or rectangular shape, and may be configured to be separated from the case 120 if the gas pressure in the accommodation space increases.

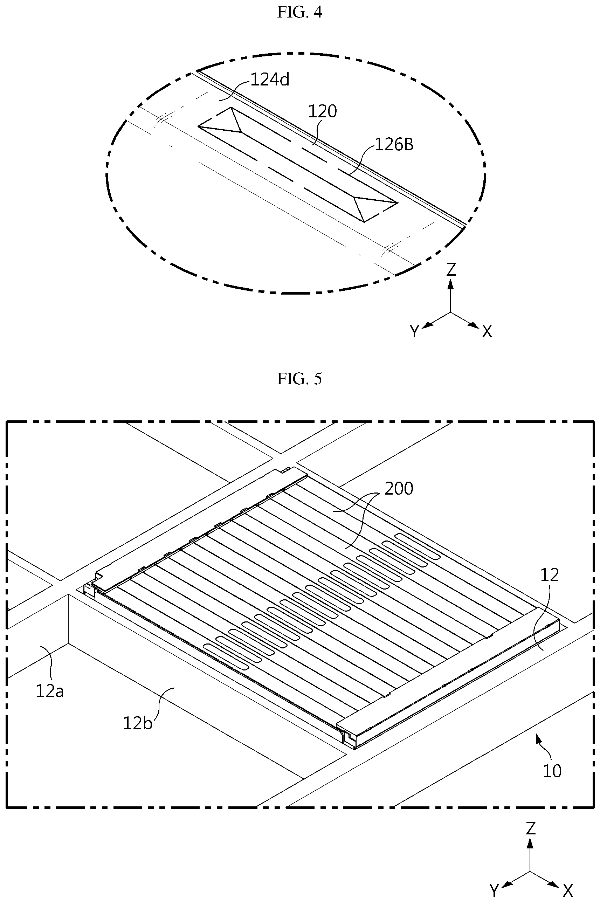

FIG. 4 is a diagram illustrating a venting portion 126B of a battery cell according to another modified embodiment.

As shown in FIG. 4, a venting portion 126B of a battery cell according to another modified embodiment may be configured to be separated from the case 120, when the gas pressure in the accommodation space increases, while being divided into a plurality of parts.

The battery cell according to the present disclosure may be applied to the battery pack to be described later, and may also be applied to a battery pack, which has a different structure from the battery pack, or a battery module thereof.

FIG. 5 is a diagram illustrating a battery pack 10 according to an embodiment of the present disclosure.

As shown in FIG. 5, a battery pack 10 according to an embodiment of the present disclosure may include a battery unit 200 including the battery cell 100 described above, and a pack case 12.

The battery unit 200 may constitute a block together with at least one other battery unit and may be accommodated in the pack case 12. In this case, a plurality of battery units constituting each battery unit block may be stacked side by side.

As will be described again below, each battery unit 200 may include at least one battery cell and a battery cell cover that partially covers and supports the exterior of the at least one battery cell. In this case, the at least one battery cell may include the pouch-type battery cell 100 shown in FIG. 1.

The pack case 12 has an inner space for accommodating a plurality of battery units 200. In this case, each battery unit 200 may be directly seated in the pack case 12 without a separate case.

In addition, the pack case 12 may be configured to distribute a plurality of battery unit blocks, each including a plurality of battery units 200, to a plurality of separated accommodation rooms to be accommodated therein.

To this end, the pack case 12 may include walls forming the inner space and cross beams 12a and 12b dividing the inner space into a plurality of accommodation rooms.

In an embodiment, a gas inlet through which gas generated from the battery unit 200 flows in may be provided on one face of the wall adjacent to the inner space of the pack case 12, and a gas channel may be provided inside the wall. In addition, a gas valve may be provided on the other face of the wall adjacent to the outside to discharge the gas moving through the gas channel to the outside.

In this case, the gas movement path leading to the gas inlet, gas channel, and gas valve of the side wall may be respectively provided in each accommodation room. That is, the gas discharged from a first battery unit block may be discharged through a first gas venting path in which a first gas inlet, a first gas channel, and a first gas valve sequentially lead to each other, and the gas discharged from a second battery unit block may be discharged through a second gas venting path in which a second gas inlet, a second gas channel, and a second gas valve sequentially lead to each other.

In an embodiment, the battery pack 10 may further include a heat sink (not shown). The heat sink may be interposed between the battery unit block and the bottom floor of the accommodation room where the battery unit block is seated. This heat sink may be configured to be in thermal contact with the battery unit block to cool the battery unit block. To this end, the heat sink may be made of a metal material with high thermal conductivity and high heat resistance.

In addition, the pack case 12 may be configured to further accommodate various electrical components required for the battery pack 10. For example, the pack case 12 may accommodate a variety of electrical equipment (not shown) that controls the charging and discharging operation of the battery assembly included in each battery unit 200 or monitors SOC (state-of-charge), SOH (state-of-health), and the like.

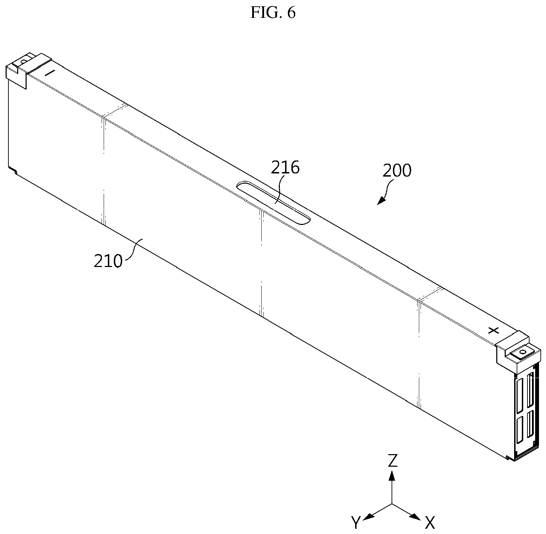

FIG. 6 is a perspective view illustrating a battery unit 200 included in a battery pack according to an embodiment of the present disclosure.

As shown in FIG. 6, the battery unit 200 may include a battery cell cover 210 configured to partially cover and support the exterior of at least one battery cell.

As will be explained again below, the battery cell cover 210 may be configured to cover both sides and the top edge of at least one battery cell, while opening the front, rear, and bottom sides of the at least one battery cell.

In addition, the battery cell cover 210 may include a vent hole 216 through which gas or flame from the battery cell inserted therein is discharged.

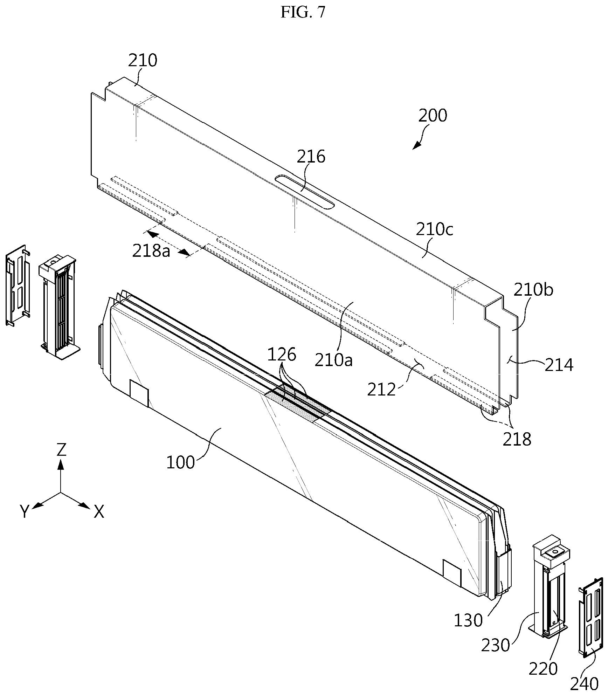

FIG. 7 is an exploded perspective view illustrating the battery unit 200 shown in FIG. 6.

As shown in FIG. 7, the battery unit 200 may include at least one battery cell 100 and a battery cell cover 210 according to the present disclosure. In addition, the battery unit 200 may include a bus bar 220, a bus bar frame 230, and an insulating cover 240.

As described above, the battery cell 100 may have a venting portion 126 provided in an edge portion that does not include a sealing portion.

The battery cell cover 210 may be configured to partially cover and support at least one battery cell 100. In this case, the battery cell cover 210 may be configured to support the at least one battery cell 100 in an upright state.

For example, as shown in FIG. 7, the battery cell cover 210 may be configured to partially surround the exterior of three pouch-type battery cells 100 and support the battery cells in an upright state.

To this end, the battery cell cover 210 may include a slot 212 configured to insert at least one battery cell 100 thereinto, and an opening 214 configured such that the electrode lead 130 of the battery cell 100 inserted into the slot 212 is exposed to the outside of the battery cell cover 210.

In particular, the battery cell cover 210 may include a vent hole 216 provided at a position corresponding to the venting portion 126 of the battery cell 100 inserted into the slot 212.

The battery cell cover 210 described above may include a first cover portion 210a that covers one side of the battery cells inserted into the slot 212, a second cover portion 210b that covers the other side of the battery cells, and a third cover portion 210c that connects the first cover portion 210a and the second cover portion 210b and covers the upper portion of the battery cells.

For example, the battery cell cover 210 may be configured in an "n", "u", or " 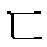 " shape to surround three faces of at least one battery cell.

As mentioned above, the edge of the battery cell 100 inserted into and supported by the battery cell cover 210 may include a first edge portion including the sealing portion and a second edge portion that is integrally formed and does not include the sealing portion. The venting portion 126 of the battery cell 100 may be provided in the second edge portion of the battery cell 100.

In addition, the third cover portion 210c of the battery cell cover 210 may be configured to cover the second edge portions of the battery cells inserted into the slot 212. In addition, the third cover portion 210c may have a vent hole 216 provided at a position corresponding to the venting portions of the battery cells.

In an embodiment, the battery cell cover 210 may include a blocking portion 218. The blocking portion 218 may be configured to support the battery cells inserted into the slot 212 of the battery cell cover 210 and block removal of the battery cells. To this end, the blocking portions 218 may be configured to extend from the ends of the first cover portion 210a and the second cover portion 210b, respectively, and support the lower ends of the battery cells inserted into the battery cell cover 210.

For example, the blocking portions 218 may be bent from the ends of the first cover portion 210a and the second cover portion 210b, respectively, toward the slot 212 so as to form a hook structure.

In an embodiment, the blocking portion 218 may have an insertion groove 218a into which a finger of a jig, which is configured to come into contact with the inner surface of the battery cell cover 210 and change the gap between the first cover portion 210a and the second cover portion 210b, is inserted

The battery cell cover 210 described above may be integrally formed. For example, the battery cell cover 210 may be manufactured by bending a plate-shaped metal plate or by injection molding.

The battery cell cover 210 having a simplified structure described above is made of a metal material with higher rigidity than the case of the battery cell 100, thereby protecting the battery cell 100 from external impact or vibration. For example, the battery cell cover 210 may be made of a material including stainless steel (SUS), which is easy to process and has high corrosion resistance.

The bus bar 220 may be configured to be electrically connected to the electrode lead 130 of at least one battery cell 100 covered by the battery cell cover 210.

The bus bar frame 230 may be configured to support the bus bar 220. This bus bar frame 230 may also have a terminal electrically connected to the bus bar 220.

The insulating cover 240 may be configured to prevent short circuit of the electrode lead 130 or bus bar 220. To this end, the insulating cover 240 may be made of polymer synthetic resin with insulation.

Although not shown in FIGS. 6 and 7, the battery unit 200 may further include a clamping member configured to clamp the battery cell cover 210. This clamping member may be configured to clamp the battery cell cover 210 into which at least one battery cell 100 is inserted, thereby preventing the gap between the first cover portion 210a and the second cover portion 210b of the battery cell cover 210 from being widened or preventing the battery cell 100 inserted into the slot 212 of the battery cell cover 210 from being removed from the slot 212. The clamping member may be configured as a tape or may be made of an elastic metal material.

Meanwhile, although it is illustrated in FIG. 7 that three battery cells 100 are covered by the battery cell cover 210, the number of battery cells covered by the battery cell cover 210 may vary depending on the scale of the battery cell cover 210.

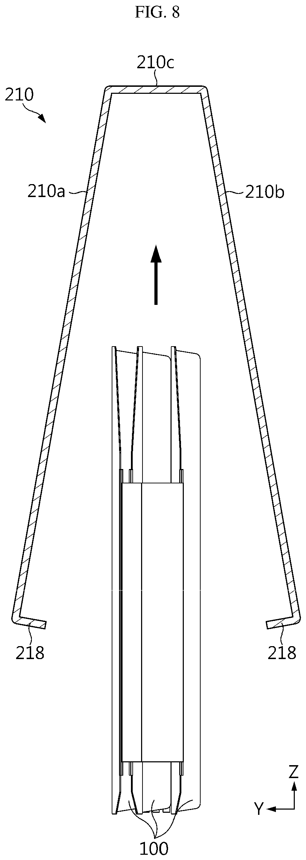

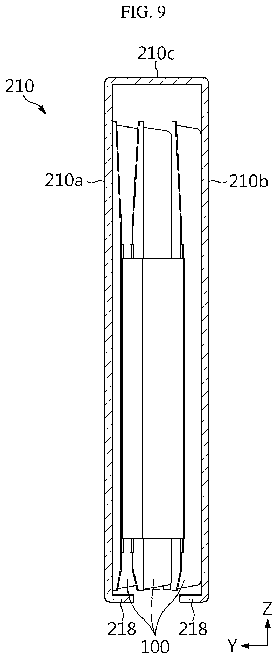

FIGS. 8 and 9 are diagrams illustrating a method of assembling a battery unit.

First, as shown in FIG. 8, when a finger of a jig is inserted into the battery cell cover 210 to widen the gap between the first cover portion 210a and the second cover portion 210b of the battery cell cover 210, the battery cell 100 may be safely inserted between the first cover portion 210a and the second cover portion 210b.

The blocking portions 218 of the battery cell cover 210 may have appropriate lengths and shapes so as not to damage the battery cells inserted as described above.

Next, as shown in FIG. 9, when the finger of the jig is removed after at least one battery cell 100 is inserted into the battery cell cover 210, the first cover portion 210a and the second cover portion 210b of the battery cell cover 210 return to their original positions by elastic force.

Then, the blocking portions 218 of the battery cell cover 210 supports the lower end of the battery cell 100 inserted between the first cover portion 210a and the second cover portion 210b to cover the battery cell 100, thereby blocking removal of the battery cell 100.

To this end, the blocking portions 218 may extend from the ends of the first cover portion 210a and the second cover portion 210b, respectively, to support the lower end of the battery cell 100. For example, the blocking portions 218 may be bent from the ends of the first cover portion 210a and the second cover portion 210b, respectively, toward the inside of the battery cell cover 210 to form a hook structure.

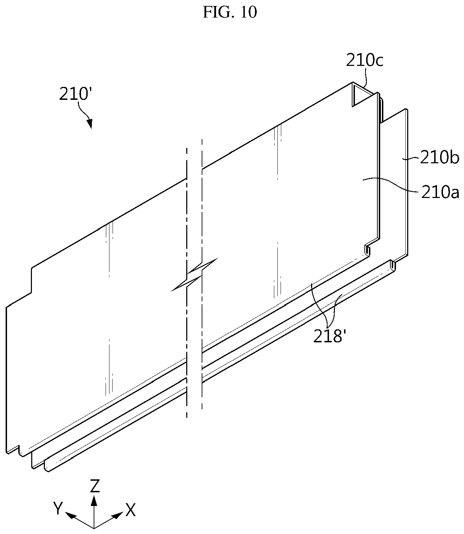

FIG. 10 is a diagram illustrating a battery cell cover 210' according to a modified embodiment.

As shown in FIG. 10, blocking portions 218' of the battery cell cover 210' may be bent from the ends of the first cover portion 210a and the second cover portion 210b of the battery cell cover 210', respectively, toward the inside of the battery cell cover 210', and then bent toward the third cover portion 210c to form a hook structure.

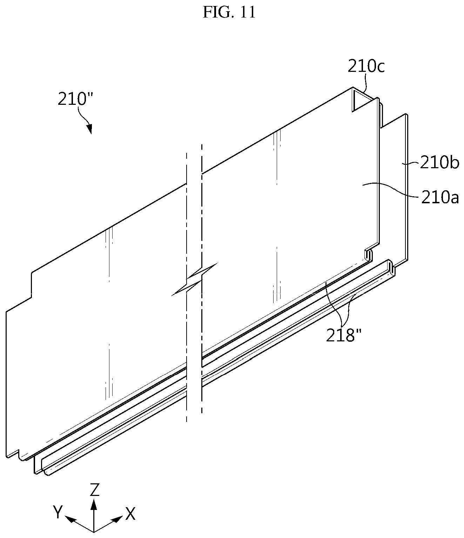

FIG. 11 is a diagram illustrating a battery cell cover 210" according to another modified embodiment.

As shown in FIG. 11, blocking portion 218" of the battery cell cover 210" may be bent from the ends of the first cover portion 210a and the second cover portion 210b of the battery cell cover 210", respectively, toward the third cover portion 210c and then bent again in a round shape toward the opposite side of the third cover portion 210c. In this way, the blocking portions 218" are configured to support battery cells by a round surface, thereby preventing damage to soft battery cells such as pouch-type battery cells.

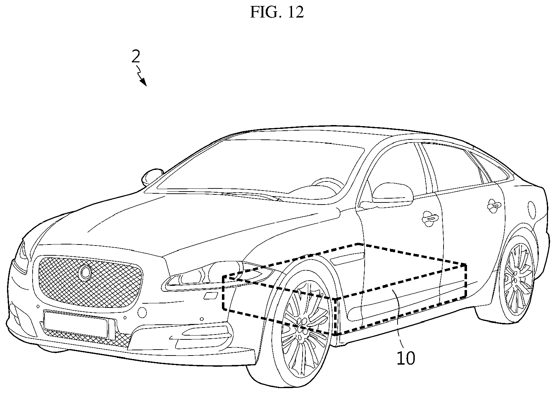

FIG. 12 is a diagram illustrating a vehicle 2 according to an embodiment of the present disclosure.

As shown in FIG. 12, a vehicle 2 according to an embodiment of the present disclosure may include at least one battery cell 100 according to any one of the various embodiments described above. For example, the vehicle 2 may have a battery pack 10 including the battery cell 100 according to the present disclosure described above.

The battery cell 100 or battery pack 10 included in the vehicle 2 as described above may provide electrical energy required for various operations of the vehicle 2.

For reference, the pouch-type battery cell 100 or battery pack 10 according to the present disclosure may be applied to ESSs (Energy Storage Systems) or various electric devices, as well as vehicles.

As described above, according to the present disclosure, since a venting portion for venting the internal gas of the battery cell is provided in the area, excluding sealed edges, of the entire case of the battery cell having the sealed edges, it is possible to precisely control the gas discharge direction when swelling or thermal runaway of the battery cell occurs.

In addition, multiple battery cells are only partially covered by the battery cell cover in a simplified structure and mounted directly to the battery pack case, instead of being accommodated in a separate module case and mounted to the battery pack case, thereby reducing the overall weight and volume of the battery pack and improving the energy density of the battery pack.

In addition, since the battery cell cover has a vent hole provide at a position corresponding to the venting portion of the battery cell, it is possible to prevent serial thermal runaway of other battery cells adjacent to the battery cell, which discharges gas, or other battery units.

In addition, the blocking portion of the battery cell cover supports the battery cell inserted inside the battery cell cover and blocks removal of the battery cell, thereby preventing the battery cell from changing in its position or being separated, and ensuring the safety and reliability of the battery pack.

In addition, an insertion groove into which a jig for changing the spacing between both ends of the battery cell cover is inserted is provided in the blocking portion of the cell cover, thereby facilitating the assembly process of inserting the battery cell into the battery cell cover and preventing damage to the battery cell.

Furthermore, it goes without saying that the embodiments according to the present disclosure are able to solve various technical problems other than those mentioned in this specification in the relevant technical field as well as related technical fields.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A battery cell comprising:
a case comprising a first case part and a second case part facing each other and configured to accommodate an electrode assembly in an accommodation space provided between the first case part and the second case part; and
an electrode lead having one end connected to the electrode assembly and the other end extending to the outside of the case,
wherein the case comprises:
a sealing portion provided by bonding an edge of the first case part and an edge of the second case part to each other so as to seal the accommodation space; and
a venting portion provided in a portion of the case, excluding an edge portion where the sealing portion is provided, and configured to discharge a gas from the accommodation space to the outside of the case.

2. The battery cell according to claim 1,
wherein the venting portion constitutes a part of the case and is configured to rupture earlier than the sealing portion when gas pressure in the accommodation space increases.

3. The battery cell according to claim 2,
wherein the venting portion is configured to be thinner than other portions of the case or is configured to have the same thickness as those of the other portions and have a line-shaped groove or notch provided therein.

4. The battery cell according to claim 1,
wherein the edge portion of the case comprises:
a first edge portion comprising the sealing portion; and
a second edge portion formed integrally with the first case part and the second case part, and
wherein the venting portion is provided in the second edge portion.

5. A battery pack comprising the battery cell according to any one of claims 1 to 4.

6. The battery pack according to claim 5,
wherein the battery cell comprises a pouch-type battery cell.

7. The battery pack according to claim 5, further comprising:
a plurality of battery cells each corresponding to the battery cell;
a pack case having an inner space that accommodates the plurality of battery cells; and
a battery cell cover configured to cover the outer surface of at least one battery cell among the plurality of battery cells accommodated in the inner space.

8. The battery pack according to claim 7,
wherein the battery cell cover comprises:
a slot configured to insert the at least one battery cell thereinto; and
a vent hole provided at a position in the battery cell cover corresponding to the venting portion of the at least one battery cell inserted into the slot.

9. The battery pack according to claim 8,
wherein the battery cell cover further comprises:
a first cover portion configured to cover a first face of the at least one battery cell;
a second cover portion configured to cover a second face of the at least one battery cell; and
a third cover portion configured to connect the first cover portion and the second cover portion and cover a third face of the at least one battery cell located between the first face and the second face, and
wherein the vent hole is provided in the third cover portion.

10. The battery pack according to claim 9,
wherein the slot is provided between the first cover portion and the second cover portion.

11. The battery pack according to claim 8,
wherein the battery cell cover further comprises a blocking portion configured to support the at least one battery cell inserted into the slot and block removal of the at least one battery cell.

12. A vehicle comprising the battery cell according to any one of claims 1 to 4.
